# EUROPEAN PATENT SPECIFICATION

(11) **EP 2 302 233 B1**
(45) Date of publication and mention of the grant of the patent: **23.03.2016**
(21) Application number: 10251583.0
(22) Date of filing: 11.09.2010
(51) Int. Cl.: F16B 37/04

(54) **Fastener assembly**
Befestigungsanordnung
Ensemble de fixation

(30) Priority: 23.09.2009 GB 0916702
(43) Date of publication of application: 30.03.2011
(73) Proprietor: C P Witter Limited, Deeside Industrial Park Deeside Flintshire CH5 2NY (GB)
(72) Inventor: Edwards, Jonathan, Candy, Oswestry SY10 9BA (GB)
(74) Representative: Lambert, Thomas John

(56) References cited:
- DE-A1- 1 500 930
- DE-A1-102007 021 747
- DE-C1- 3 237 952
- GB-A- 2 044 878
- US-A- 2 649 126
- US-A- 3 765 464

## Description

This invention concerns a fastener assembly and more particularly a fastener assembly in combination with a component to be fastened to another article.

Vehicle towbars, for example, widely use fixed nuts or threaded inserts that are welded or fixed to the towbar. Typically they are welded to towbar components to align with a hole in the component. The fixed nut or threaded insert is used commonly because there is limited access for using a loose nut and bolt. For example, a tow bar may be supported at the rear of a vehicle by connection to chassis side rails. The tow bar has end plates to each of which one end of a respective side arm is fastened the other end being connected, in turn, to a respective chassis rail of the vehicle. Each end plate has an aperture for receipt of a bolt for connecting the side arm to the tow bar, with a threaded nut being welded or similarly fixed to the reverse face of the end plate, i.e. inside the towbar itself.

A problem with using a welded or otherwise fixed threaded nut or insert is that when painted the threads of the nut or insert are contaminated by the paint, such as a polyester powder coating. This leads to bolts becoming obstructed when inserted into the nuts, whereby the joint can be ineffective and fail. For example the bolt and nut may become cross-threaded resulting in a jam that prevents connection. Replacement of the nut is generally not possible as it is impossible to access without cutting through the tow bar or removing the end plates (which are integrally formed with the towbar by for example welding or the like). The whole towbar thus has to be replaced.

Thread protection or masking using silicone rubber inserts in the nuts is possible and at least partially effective. However, after painting it is necessary to carry out a further operation of cleaning the threads with a tap. This is a slow and hence costly process.

Another complication can arise from any pre-treatment of components prior to painting, such as shot blasting. This pre-treatment provides a better surface for painting, so that an excellent paint finish can be achieved. However, blast treatment materials can become lodged in threads and subsequently become embedded in the paint. These blast grit particles are extremely hard and make the removal of paint from threads even more difficult, so that thread jamming is almost inevitable.

DE102007021747 (SIEMENS AG) discloses, according to a machine translation of the abstract, a fastening device for training an interface of a shell to an inner extension of a rail vehicle, with a cage which is configured for attachment to a substructure, and at least one nut for insertion into the cage through an opening.

It is an object of the present invention to obviate or mitigate the aforementioned disadvantages. Another object of the present invention is to provide a means for adding threaded nuts to components after any finishing treatment and/or in areas that are difficult to access.

According to a first aspect of the invention there is provided a component having an aperture fitted with a fastener assembly, the fastener assembly comprising a threaded nut and a retainer device for positioning the threaded nut relative to the aperture for attachment of a threaded bolt, the retainer device comprising a nut receiving part and a pair of tongues extending from the nut receiving part and locatable relative to the aperture to hold the nut relative to the aperture, the component having a first side and a second side, the aperture extending through the component from the first side to the second side, the component having at least one member that provides at least one bearing surface for the nut and an opening for receipt of a bolt, the at least one member dividing the aperture into a first portion through which the nut receiving part may pass from the first side of the component to the second side and a pair of clearances defined between the member and outer edges of the aperture for receipt of said tongues, the opening being between the pair of clearances.

The configuration of the aperture thus allows the fastener assembly to be presented to the first side of the component which, typically, is accessible and passed through the aperture such that the nut is suspended over the aperture on the second side where the accessibility is not so good.

The opening accommodates the bolt for receipt by the nut and the aperture is arranged around the opening to accommodate location of the nut retainer.

The first portion of the aperture is smaller than nut receiving part of the retainer device so that the nut receiving part cannot pass through the first portion of the aperture when the plane occupied by the nut is substantially parallel to the plane of the aperture. The nut receiving part is preferably sized so that inclining the fastener assembly relative to the aperture allows the nut receiving portion to pass through the aperture. This is permitted by the tongues entering the clearances.

The tongues may have lips for engagement with the first side of the component at the edges of the aperture. The lips may take any suitable form for engaging the sides so that the nut retainer is supported in place in the aperture without it falling out on the second side.

At least one of the lips may longer than the width of a narrowest portion of the corresponding clearance so as to prevent the nut retainer from falling out of the aperture.

The tongues are preferably elongate. An inwards protrusion on one or both of the tongues may be provided for retaining the nut in the nut receiving part.

One or both of the tongues may be resiliently deformable such that, in use, they deform outwardly to allow travel of the nut out of the cage, past the inwards protrusion and towards the component when the nut is threaded on to a bolt.

The first portion of the aperture may be substantially rectangular.

The clearances are in the form of elongate slots which may extend substantially in parallel from the first portion of the aperture.

The first portion of the aperture may be defined between a first edge defined by the member, a facing second edge defined by the component and substantially opposed third and fourth edges intermediate the first and second edges. The nut receiving part may have a first dimension that is longer than the shortest distance between the first and second edges and a second dimension substantially perpendicular to the first dimension that is shorter than the distance between the third and fourth edges. Thus the first dimension prevents the nut receiving part from passing through the first portion of the aperture unless it is tilted to reduce its effective length (i.e. that projected on to the plane of the aperture) with the second dimension being such that it can pass between the opposed third and fourth edges when the fastener assembly is tilted about an axis that is parallel to or coincident with the second dimension.

The opening in the member is designed to receive the shank of a bolt and is therefore, in use, substantially aligned with the threaded aperture of the nut. The opening may be an enclosed bore or simply an open area that allows passage of the bolt through the component.

The member may be a web of material that is integral with the component.

The opening may be a bore in the web of material for alignment with nut.

The opening is preferably disposed equidistant the clearances and spaced from the first portion of the aperture. However it may merge with the first portion of the aperture.

According to a second aspect of the invention there is provided a kit of parts comprising a component with an aperture and a threaded nut and a nut retainer for assembly into the component fitted with the fastener assembly of any preceding claim.

According to a third aspect of the present invention there is provided a method for fitting a nut to a component having first and second sides and an aperture extending through the component from the first to the second side, the component having at least one member that provides at least one bearing surface for the nut, the at least one member dividing the aperture into a first portion and a pair of clearances defined between the member and outer edges of the aperture, the method comprising placing the nut in a nut retainer that has a nut receiving portion and a pair of tongues, presenting the nut retainer and nut to the aperture from a first side of the component, passing the nut retainer and nut through the first portion of the aperture and the tongues through the pair of clearances so that it is supported on the second side of the component.

The inwards protrusion(s) thus serves to retain the nut in the device such that it does not fall out inadvertently by, for example, inverting the cage but is designed to effect deformation of the tongue so that the nut can pass when it is being threaded on to the bolt towards the component. When in situ, the tongues are connected to the component but still allow the deformation.

The nut receiving part of the retainer may have a base and upstanding opposed sides from each of which a tongue may extend. The sides of the nut receiving part may be folded up from the base.

The nut is prevented from rotation by the nut receiving portion and/or the tongues.

The tongues may be deformable such that they can be inserted through the aperture.

The retainer device of the invention is preferably made as a pressed metal component, especially as a pressed steel component. The sides of the retainer device are preferably folded up from the base.

The tongues preferably constitute, or extend from, one pair of opposed sides.

The device of the invention is particularly suitable for use with square nuts and the nut receiving part is preferably shaped to accommodate such.

The central part of the aperture is preferably shaped and sized to accommodate a bolt for the threaded nut.

This invention will now be further described, by way of example only, with reference to the accompanying drawings, in which:
Figure 1 is a perspective view of a separated fastener and nut according to the invention;
Figure 2 is a perspective view of the fastener with nut fitted according to the invention;
Figure 3 shows an aperture in a plate to which the fastener and nut of figures 1 and 2 is to be fitted; and
Figures 4 and 5 illustrate the fitting of the fastener and nut of figures 1 and 2 to a plate having the aperture of figure 3.

Referring to the accompanying drawings, a fastener 10 for a nut 12 is a pressed steel component shaped and sized to accommodate a square nut 12. The fastener 10 has a square base 14 and side walls folded up from the base. One pair of opposed side walls 16 are relatively short extending just below the height of a nut 12 and taper inwardly. The other pair of opposed side walls 17 are approximately the height of the nut 12. The base 14 and side walls 16 together form a cage C in which the nut 12 is received. The length L₁ of each wall 17 is longer than the distance L₂ between the outer surfaces of those walls.

Extending from the opposed side walls 17 are narrower elongate tongues 18 that have convergent sides 20 near their free ends, which are also bent outwards to provide lips 22. The tongues 18 are each resiliently deflectable and each have a small inwards protrusion 24 in the form of a dimple or the like, past which protrusions a nut 12 can be pushed into the fastener 10 (by deflecting the tongues slightly outwards) but which will prevent the nut 12 from falling out of the fastener 10, when it is turned over in order to fit the nut and fastener to an aperture 26 of a component 28. The nut 12 is thus held captive in the cage by the dimples 24.

The size of the base 14 of the fastener 10 and the spacing of the dimple protrusions 24 from the base are intended to allow for axial and lateral movement of a nut 12 in the fastener 10 to cope with any displacement of misalignment of the fixing or component, with which it is to be used.

The base 14 of the fastener 10 has a hole 30 therethrough for a bolt to be threadedly fastened to a nut 12 in the fastener.

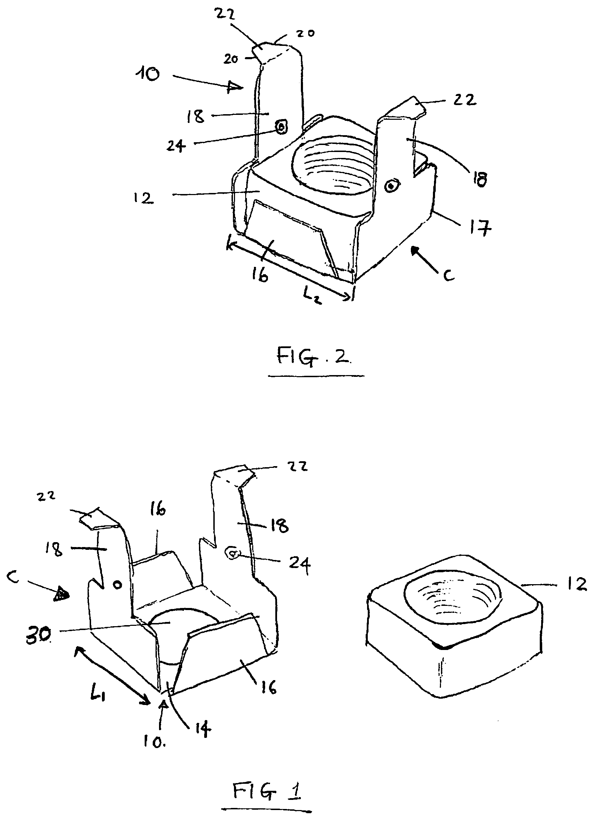

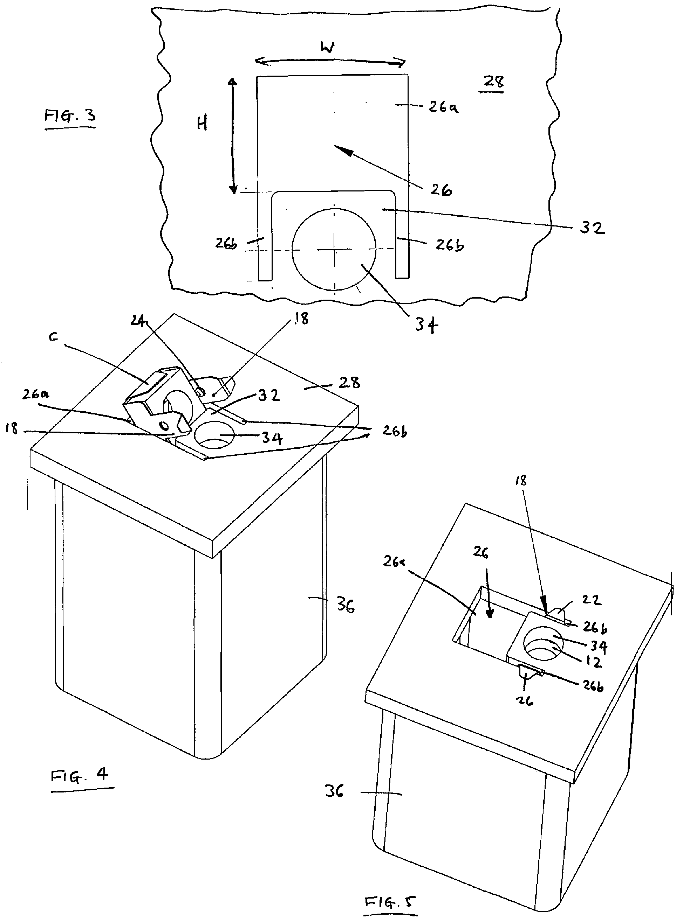

The fastener, with nut fitted, as shown in Figure 2 is intended to be fitted to an aperture 26 in component 28, and particularly to a side of the component that is difficult to access such as, for example, to a side of an end plate that is inside a towbar for a motor vehicle. The aperture 26 is shown in detail in Figure 3 of the accompanying drawings and comprises a rectangular portion 26a with a height H, a width W and two laterally spaced slots 26b that extend from one end of the rectangular portion so as to increase the height. The slots 26b are separated from one another by a web of material 32 that is integral with rest of the component 28. The web 32 has a central bore 34 to which the central threaded hole of the nut 12 is generally aligned and through which a bolt is designed to pass. The height H extends between an edge defined by the web 32 and an opposed edge of the remainder of the component, whereas the width W extends between opposed side edges of the aperture.

In use, a nut 12 is inserted into the fastener 10 past the protrusions 24 of the tongues 18 as shown in figure 2. The nut 12 will then remain captive in the cage C when it is fitted to the component 28. The cage C is then presented to the aperture 26 from a front side of the component with the base 14 facing the aperture 26, the tongues 18 facing away from the aperture 26, and the walls 17 and tongues 18 disposed above the slots, as illustrated in figure 4. The length L₁ of each of the walls 17 is greater than height H of the rectangular portion 26a such that the cage C is prevented from passing through the aperture 26 without tilting. The distance L₂ between those walls 17 is shorter than width W of the aperture. Thus in order to fit the cage C it is tilted with respect to the plane of the aperture about an axis that is substantially parallel to the width W such that the tongues 18 pass into the slots 26b as shown in figure 4. By tilting, the effective distance between the walls 16 of the cage C measured in the plane of the aperture is reduced so that the cage C can pass through the rectangular portion 26a of the aperture. The nut 12 and cage C pass behind the web 32 as the tongues 18 slide down the length of the slots 26b thus bringing the nut 12 into general alignment with the bore 34 on the reverse side of the component (see figure 5). The lips 22 have a length that is greater than the width of each slot 26b and bear against the component 28 beyond the outer edges of the aperture 26 on each side of the slots 26b such that they retain the cage C in place and prevent it from passing through and dropping out of the aperture 26 on the reverse side of the component 28. Some resilient bending of the tongues 18 may facilitate locating the cage C into this position.

The component 28 is shown in figures 4 and 5 fixed (e.g. by welding or the like) on the end of a box tube 36 (which may be, for example, part of a towbar) making access to the reverse side of the component 28 difficult. In practice the length of the tube may be significantly greater than that shown in the figures such that access is impossible.

Attempting to insert the cage C into the aperture 26 in the alternative orientation with the cage C rotated about the central axis of the hole 30 through 90° is prevented as the length L₁ is greater than the width W of the aperture 26 such that the cage C cannot pass therethrough.

Once the cage C is in place with the nut 12 present on the reverse side of the component 28, a second component (not shown) may be positioned over the first component 28 for fixing thereto. The second component similarly has a fixing aperture by which it is fixed to the first component 28. A bolt or the like is passed through that aperture, the bore 34 in the web 32 and into threaded engagement with the nut 12. Continued rotation of the bolt draws the nut 12 on to the reverse face of the web 32 of component 28. It will be readily apparent that the distance of travel of the nut 12 towards the component 28 depends upon the thickness of the components and the length of the tongues 18. The lips 22 overlap the first component 28 on one side and the tongues 18 extend through the aperture 26 and out the other side. As the bolt is threaded the nut 12 is prevented from rotating initially by the side walls 16, 17 of the cage C and then by the tongues 18 on each side. The small inwards protrusions 24 are sufficiently small such that the nut 12 may pass them when being drawn on to the component 28 by the torque applied to the bolt 40. As the nut 12 passes the protrusions 24 it causes the tongues 18 to be deflected slightly outwards in that region. The amount of outwards deflection is limited by virtue of the tongues 18 being retained in the slots 26b by lips 22. The structure of the cage C is thus able to accommodate different thicknesses of the first component 28.

The dimensions of the first portion 26a of the aperture 26 and those of the cage C are such that the cage C and nut 12 can only be fitted in the desired orientation. The cage C serves to retain the nut on the reverse face of the component 28 without risk of the cage dropping out aperture 26 and into an area (such as the inside of the tube 36) that is inaccessible. In particular the lips 22 prevent the cage C from passing all the way through the aperture 26.

It will be appreciated that the precise shape of the aperture 26 may be varied. In particular the first portion may be any shape that is suitable for allowing passage of the cage C therethrough by tilting it and the slots 26b may be provided any suitable shaped clearance between the web or other feature that defines the nut bearing surface and the edge of the aperture. Similarly any shape or configuration of bearing surface such as that provided by the web 34 may be provided for the nut to bear against provided there is some form of opening for alignment with the threaded bore in the nut so as to allow connection to the bolt. The opening may be an enclosed bore or simply a gap, clearance or open region for receipt of the bolt. It will also be appreciated that the tongues can take any suitable form.

The shape of the aperture in the component provides for a more secure retention of the fastener 10, as it resists the turning tightening force required for high load and torque applications, such as of towbars.

## Claims

1. A component (28) having an aperture (26) fitted with a fastener assembly, the fastener assembly comprising a threaded nut (12) and a retainer device (10) for positioning the threaded nut (12) relative to the aperture (26) for attachment of a threaded bolt, the retainer device (10) comprising a nut receiving part and a pair of tongues (18) extending from the nut receiving part and locatable relative to the aperture (26) to hold the nut (12) relative to the aperture (26), the component (28) having a first side and a second side, the aperture (26) extending through the component (28) from the first side to the second side, the component (28) having at least one member (32) that provides at least one bearing surface for the nut (12) and an opening (34) for receipt of a bolt, the at least one member (32) dividing the aperture (26) into a first portion (26a) through which the nut receiving part may pass from the first side of the component (28) to the second side and a pair of clearances (26b) defined between the member (32) and outer edges of the aperture (26) for receipt of said tongues (18), the opening (34) being between the pair of clearances (26b).

2. A component (28) fitted with a fastener assembly according to claim 1, wherein the first portion (26a) of the aperture (26) is smaller than nut receiving part of the retainer device (10) so that the nut receiving part cannot pass through the first portion (26a) of the aperture (26) when the plane occupied by the nut (12) is substantially parallel to the plane of the aperture (26), the nut receiving part being sized so that inclining the fastener assembly relative to the aperture (26) allows the nut receiving part to pass through the aperture (26) and the tongues (18) to enter the clearances (26b).

3. A component (28) fitted with a fastener assembly according to claim 1 or 2, wherein the tongues (18) have lips (22) for engagement with the first side of the component (28) at the edges of the aperture (26).

4. A component (28) fitted with a fastener assembly according to claim 3, wherein at least one of the lips (22) is longer than the width (W) of a narrowest portion of the corresponding clearance.

5. A component (28) fitted with a fastener assembly according to any one of claims 1 to 4, wherein the tongues (18) are elongate.

6. A component (28) fitted with a fastener assembly according to any preceding claim, wherein there is defined an inwards protrusion (24) on one or both of the tongues (28) for retaining the nut (12) in the nut receiving part.

7. A component (28) fitted with a fastener assembly according to claim 6, wherein one or both of the tongues (18) is resiliently deformable such that, in use, they deform outwardly to allow travel of the nut (12) out of the cage, past the inwards protrusion (24) and towards the component (28) when the nut (12) is threaded on to a bolt.

8. A component (28) fitted with a fastener assembly according to any preceding claim, wherein the first portion (26a) of the aperture (26) is substantially rectangular.

9. A component (28) fitted with a fastener assembly according to any preceding claim, wherein the clearances (26b) are in the form of elongate slots.

10. A component (28) fitted with a fastener assembly according to claim 9, wherein the elongate slots (26b) extend substantially in parallel from the first portion (26a) of the aperture (26).

11. A component (28) fitted with a fastener assembly according to any preceding claim wherein the first portion (26a) of the aperture (26) is defined between a first edge defined by the member (32) a facing second edge defined by the component (28) and substantially opposed third and fourth edges intermediate the first and second edges, wherein the nut receiving part has a first dimension that is longer than the shortest distance between the first and second edges and a second dimension substantially perpendicular to the first dimension that is shorter than the distance between the third and fourth edges.

12. A component according to any preceding claim, wherein the member (32) is a web of material that is integral with the component (28).

13. A component according to claim 11, wherein the opening (34) is defined by a bore in the web of material for alignment with nut.

14. A kit of parts comprising a component (28) with an aperture (26) and a threaded nut (12) and a nut retainer (10) for assembly into the component (28) fitted with the fastener assembly of any preceding claim.

15. A method for fitting a nut (12) to a component (28) having first and second sides and an aperture (26) extending through the component (28) from the first to the second side, the component (28) having at least one member (32) that provides at least one bearing surface for the nut (12), the at least one member (32) dividing the aperture (26) into a first portion (26a) and a pair of clearances (26b) defined between the member (32) and outer edges of the aperture (26), the method comprising placing the nut (12) in a nut retainer (10) that has a nut receiving portion and a pair of tongues (18), presenting the nut retainer (10) and nut (12) to the aperture (26) from a first side of the component (28), passing the nut retainer (10) and nut (12) through the first portion (26a) of the aperture (26) and the tongues (18) through the pair of clearances (26b) so that it is supported on the second side of the component (28).

## Patentansprüche

1. Bauteil (28) mit einer Öffnung (26), das mit einer Befestigungsanordnung ausgestattet ist, wobei die Befestigungsanordnung eine Gewindemutter (12) und eine Haltevorrichtung (10) für das Positionieren der Gewindemutter (12) relativ zur Öffnung (26) für das Befestigen einer Gewindeschraube aufweist, wobei die Haltevorrichtung (10) ein eine Mutter aufnehmendes Teil und ein Paar Zungen (18) aufweist, die sich von dem die Mutter aufnehmenden Teil aus erstrecken und relativ zur Öffnung (26) angeordnet werden können, um die Mutter (12) relativ zur Öffnung (26) zu halten, wobei das Bauteil (28) eine erste Seite und eine zweite Seite aufweist, wobei sich die Öffnung (26) durch das Bauteil (28) von der ersten Seite zur zweiten Seite erstreckt, wobei das Bauteil (28) mindestens ein Element (32), das mindestens eine Auflagefläche für die Mutter (12) bereitstellt, und eine Öffnung (34) für die Aufnahme einer Schraube aufweist, wobei das mindestens eine Element (32) die Öffnung (26) in einen ersten Abschnitt (26a), durch den das die Mutter aufnehmende Teil von der ersten Seite des Bauteils (28) zur zweiten Seite gelangen kann, und ein Paar von Zwischenräumen (26b) unterteilt, die zwischen dem Element (32) und den äußeren Rändern der Öffnung (26) für die Aufnahme der Zungen (18) definiert werden, wobei die Öffnung (34) zwischen dem Paar der Zwischenräume (26b) zu finden ist.

2. Bauteil (28) mit einer Befestigungsanordnung nach Anspruch 1, wobei der erste Abschnitt (26a) der Öffnung (26) kleiner ist als das die Mutter aufnehmende Teil der Haltevorrichtung (10), so dass das die Mutter aufnehmende Teil nicht durch den ersten Abschnitt (26a) der Öffnung (26) gelangen kann, wenn die von der Mutter (12) in Anspruch genommene Ebene im Wesentlichen parallel zur Ebene der Öffnung (26) ist, wobei das die Mutter aufnehmende Teil so bemessen ist, dass ein Neigen der Befestigungsanordnung relativ zur Öffnung (26) gestattet, dass das die Mutter aufnehmende Teil durch die Öffnung (26) gelangen kann und die Zungen (18) in die Zwischenräume (26b) gelangen.

3. Bauteil (28) mit einer Befestigungsanordnung nach Anspruch 1 oder 2, wobei die Zungen (18) Ansätze (22) für einen Eingriff mit der ersten Seite des Bauteils (28) an den Rändern der Öffnung (26) aufweisen.

4. Bauteil (28) mit einer Befestigungsanordnung nach Anspruch 3, bei dem mindestens einer der Ansätze (22) länger ist als die Breite (W) eines schmalsten Abschnittes des entsprechenden Zwischenraumes.

5. Bauteil (28) mit einer Befestigungsanordnung nach einem der Ansprüche 1 bis 4, bei dem die Zungen (18) länglich sind.

6. Bauteil (28) mit einer Befestigungsanordnung nach einem der vorhergehenden Ansprüche, bei dem ein nach innen liegender Vorsprung (24) an einer oder beiden der Zungen (28) für das Halten der Mutter (12) in dem die Mutter aufnehmenden Teil definiert wird.

7. Bauteil (28) mit einer Befestigungsanordnung nach Anspruch 6, bei dem eine oder beide der Zungen (18) elastisch verformbar sind, so dass sie sich bei Benutzung nach außen verformen, um eine Bewegung der Mutter (12) aus dem Käfig heraus, am nach innen liegenden Vorsprung (24) vorbei und in Richtung des Bauteils (28) zu gestatten, wenn die Mutter (12) auf eine Schraube geschraubt wird.

8. Bauteil (28) mit einer Befestigungsanordnung nach einem der vorhergehenden Ansprüche, bei dem der erste Abschnitt (26a) der Öffnung (26) im Wesentlichen rechteckig ist.

9. Bauteil (28) mit einer Befestigungsanordnung nach einem der vorhergehenden Ansprüche, bei dem die Zwischenräume (26b) in der Form von länglichen Schlitzen vorliegen.

10. Bauteil (28) mit einer Befestigungsanordnung nach Anspruch 9, bei dem sich die länglichen Schlitze (26b) im Wesentlichen parallel vom ersten Abschnitt (26a) der Öffnung (26) aus erstrecken.

11. Bauteil (28) mit einer Befestigungsanordnung nach einem der vorhergehenden Ansprüche, bei dem der erste Abschnitt (26a) der Öffnung (26) zwischen einem ersten Rand, der durch das Element (32) definiert wird, einem gegenüberliegenden zweiten Rand, der durch das Bauteil (28) definiert wird, und einem im Wesentlichen gegenüberliegenden dritten und vierten Rand zwischen dem ersten und zweiten Rand definiert wird, wobei das die Mutter aufnehmende Teil eine erste Dimension, die länger ist als der kürzeste Abstand zwischen dem ersten und zweiten Rand, und eine zweite Dimension im Wesentlichen senkrecht zur ersten Dimension aufweist, die kürzer ist als der Abstand zwischen dem dritten und vierten Rand.

12. Bauteil nach einem der vorhergehenden Ansprüche, bei dem das Element (32) eine Materialbahn ist, die mit dem Bauteil (28) zusammenhängend ist.

13. Bauteil nach Anspruch 11, bei dem die Öffnung (34) durch eine Bohrung in der Materialbahn für eine Ausrichtung mit der Mutter definiert wird.

14. Bausatz aus Teilen, der ein Bauteil (28) mit einer Öffnung (26) und einer Gewindemutter (12) und einer Haltevorrichtung (10) für die Mutter für einen Einbau in das Bauteil (28) mit der Befestigungsanordnung nach einem der vorhergehenden Ansprüche aufweist.

15. Verfahren für das Anbringen einer Mutter (12) an einem Bauteil (28) mit einer ersten und zweiten Seite und einer Öffnung (26), die sich durch das Bauteil (28) von der ersten zur zweiten Seite erstreckt, wobei das Bauteil (28) mindestens ein Element (32) aufweist, das mindestens eine Auflagefläche für die Mutter (12) bereitstellt, wobei das mindestens eine Element (32) die Öffnung (26) in einen ersten Abschnitt (26a) und ein Paar von Zwischenräumen (26b) unterteilt, die zwischen dem Element (32) und den äußeren Rändern der Öffnung (26) definiert werden, wobei das Verfahren die folgenden Schritte aufweist: Anordnen der Mutter (12) in einer Haltevorrichtung (10) für die Mutter, die ein eine Mutter aufnehmendes Teil und ein Paar Zungen (18) aufweist; Vorlegen der Haltevorrichtung (10) für die Mutter und der Mutter (12) an der Öffnung (26) von einer ersten Seite des Bauteils (28) aus; Führen der Haltevorrichtung (10) für die Mutter und der Mutter (12) durch den ersten Abschnitt (26a) der Öffnung (26) und der Zungen (18) durch das Paar der Zwischenräume (26b), so dass sie auf der zweiten Seite des Bauteils (28) gestützt wird.

## Revendications

1. Composant (28) comportant une ouverture (26), équipé d'un assemblage de fixation, l'assemblage de fixation comprenant un écrou fileté (12) et un dispositif de retenue (10) pour positionner l'écrou fileté (12) par rapport à l'ouverture (26) en vue d'attacher un boulon fileté, le dispositif de retenue (10) comprenant une partie de réception de l'écrou et une paire de languettes (18) s'étendant à partir de la partie de réception de l'écrou et pouvant être positionnées par rapport à l'ouverture (26) pour retenir l'écrou (12) par rapport à l'ouverture (26), le composant (28) comportant un premier côté et un deuxième côté, l'ouverture (26) s'étendant à travers le composant (28) du premier côté vers le deuxième côté, le composant (28) comportant au moins un élément (32) établissant au moins une surface de support pour l'écrou (12), et une ouverture (34) destinée à recevoir un boulon, le au moins un élément (32) divisant l'ouverture (26) en une première partie (26a), à travers laquelle la partie de réception de l'écrou peut passer du premier côté du composant (28) vers le deuxième côté, et une paire de dégagements (26b), définis entre l'élément (32) et les bords externes de l'ouverture (26) en vue de la réception desdites languettes (18), l'ouverture (34) étant située entre la paire de dégagements (26b).

2. Composant (28) équipé d'un assemblage de fixation selon la revendication 1, dans lequel la première partie (26a) de l'ouverture (26) est plus petite que la partie de réception de l'écrou du dispositif de retenue (10), de sorte que la partie de réception de l'écrou ne peut pas passer à travers la première partie (26a) de l'ouverture (26) lorsque le plan occupé par l'écrou (12) est sensiblement parallèle au plan de l'ouverture (26), la partie de réception de l'écrou étant dimensionnée de sorte que l'inclinaison de l'assemblage de fixation par rapport à l'ouverture (26) permet le passage de la partie de réception de l'écrou à travers l'ouverture (26) et l'entrée des languettes (18) dans les dégagements (26b).

3. Composant (28) équipé d'un assemblage de fixation selon les revendications 1 ou 2, dans lequel les languettes (18) comportent des lèvres (22) destinées à s'engager dans le premier côté du composant (28) au niveau des bords de l'ouverture (26).

4. Composant (28) équipé d'un assemblage de fixation selon la revendication 3, dans lequel au moins une des lèvres (22) est plus longue que la largeur (W) de la partie la plus étroite du dégagement correspondant.

5. Composant (28) équipé d'un assemblage de fixation selon l'une quelconque des revendications 1 à 4, dans lequel les languettes (18) sont allongées.

6. Composant (28) équipé d'un assemblage de fixation selon l'une quelconque des revendications précédentes, dans lequel une saillie (24) dirigée vers l'intérieur est définie sur l'une des languettes (28) ou sur les deux languettes (28) pour retenir l'écrou (12) dans la partie de réception de l'écrou.

7. Composant (28) équipé d'un assemblage de fixation selon la revendication 6, dans lequel l'une des languettes ou les deux languettes (18) peut être déformée de manière élastique, de sorte qu'en service, elles se déforment vers l'extérieur pour permettre le déplacement de l'écrou (12) hors de la cage, le long de la saillie (24) dirigée vers l'intérieur et vers le composant (28) lorsque l'écrou (12) est fileté sur un boulon.

8. Composant (28) équipé d'un assemblage de fixation selon l'une quelconque des revendications précédentes, dans lequel la première partie (26a) de l'ouverture (26) est sensiblement rectangulaire.

9. Composant (28) équipé d'un assemblage de fixation selon l'une quelconque des revendications précédentes, dans lequel les dégagements (26b) ont la forme de fentes allongées.

10. Composant (28) équipé d'un assemblage de fixation selon la revendication 9, dans lequel les fentes allongées (26b) s'étendent de manière sensiblement parallèle à partir de la première partie (26a) de l'ouverture (26).

11. Composant (28) équipé d'un assemblage de fixation selon l'une quelconque des revendications précédentes, dans lequel la première partie (26a) de l'ouverture (26) est définie entre un premier bord défini par l'élément (32), un deuxième bord opposé défini par le composant (28) et des troisième et quatrième bords sensiblement opposés entre les premier et deuxième bords, dans lequel la partie de réception de l'écrou a une première dimension, plus longue que la distance la plus courte entre les premier et deuxième bords, et une deuxième dimension sensiblement perpendiculaire à la première dimension, plus courte que la distance entre les troisième te quatrième bords.

12. Composant selon l'une quelconque des revendications précédentes, dans lequel l'élément (32) est une bande de matériau faisant partie intégrante du composant (28).

13. Composant selon la revendication 11, dans lequel l'ouverture (34) est définie par un alésage dans la bande de matériau, en vue d'un alignement avec l'écrou.

14. Kit de pièces, comprenant un composant (28) avec une ouverture (26) et un écrou fileté (12) ainsi qu'un élément de retenue de l'écrou (10) en vue d'un assemblage dans le composant (28) équipé de l'assemblage de fixation selon l'une quelconque des revendications précédentes.

15. Procédé de fixation d'un écrou (12) sur un composant (28), comportant des premier et deuxième côtés et une ouverture (26) s'étendant à travers le composant (28) du premier côté vers le deuxième côté, le composant (28) comportant au moins un élément (32) établissant au moins une surface de support pour l'écrou (12), le au moins un élément (32) divisant l'ouverture (26) en une première partie (26a) et une paire de dégagements (26b), définis entre l'élément (32) et les bords externes de l'ouverture (26), le procédé comprenant les étapes de positionnement de l'écrou (12) dans un élément de retenue de l'écrou (10), comportant une partie de réception de l'écrou et une paire de languettes (18), présentation de l'élément de retenue de l'écrou (10) et de l'écrou (12) à l'ouverture (26) à partir d'un premier côté du composant (28), de passage de l'élément de retenue de l'écrou (10) et de l'écrou (12) à travers a première partie (26a) de l'ouverture (26) et des languettes (18) à travers la paire de dégagements (26b), de sorte à assurer son support sur le deuxième côté du composant (28).
